Europäisches Patentamt

European Patent Office

Office européen des brevets

(19)

(11) Veröffentlichungsnummer : **0 541 567 B1**

(12) **EUROPÄISCHE PATENTSCHRIFT**

(45) Veröffentlichungstag der Patentschrift :
27.09.95 Patentblatt 95/39

(51) Int. Cl.$^6$ : **G06T 7/20**

(21) Anmeldenummer : **91911278.9**

(22) Anmeldetag : **24.06.91**

(86) Internationale Anmeldenummer :
**PCT/DE91/00513**

(87) Internationale Veröffentlichungsnummer :
**WO 92/02894 20.02.92 Gazette 92/05**

(54) **VERFAHREN ZUR ANALYSE ZEITLICHER FOLGEN DIGITALER BILDER.**

(30) Priorität : **27.07.90 DE 4023938**

(43) Veröffentlichungstag der Anmeldung :
**19.05.93 Patentblatt 93/20**

(45) Bekanntmachung des Hinweises auf die
Patenterteilung :
**27.09.95 Patentblatt 95/39**

(84) Benannte Vertragsstaaten :
**DE FR GB**

(56) Entgegenhaltungen :
**K.-P. KARMANN 'TIME RECURSIVE MOTION ESTIMATION USING DYNAMICAL MODELS FOR MOTION PREDICTION' 16. Juni 1990 , IEEE 10. INTERNATIONAL CONF. ON PATTERN RECOGNITION , ATLANTIC CITY US , BAND 1, SEITEN 268-270
F.AGUIRRE ET AL 'UNDERWATER NAVIGATION BY VIDEO SEQUENCE ANALYSIS' 16. Juni 1990 , IEEE 10. INTERNATIONAL CONF. ON PATTERN RECOGNITION , ATLANTIC CITY US , BAND 2, SEITEN 537-539
J. HEEL 'DIRECT DYNAMIC MOTION VISION' 13. Mai 1990 , IEEE INTERNATIONAL CONF. ON ROBOTICS AND AUTOMATION , CINCINNATI US , PROCEEDINGS , SEITEN 1142-1147**

(73) Patentinhaber : **SIEMENS AKTIENGESELLSCHAFT
Wittelsbacherplatz 2
D-80333 München (DE)**

(72) Erfinder : **KARMANN, Klaus-Peter
Strassbergerstrasse 8
D-8000 München 40 (DE)**

## Beschreibung

Mit Hilfe von Verfahren zur Analyse zeitlicher Folgen digitaler Bilder sollen aus einer oder mehreren zeitlichen Folgen digitaler Bilder, gegebenenfalls unter Zuhilfenahme von Meßdaten weiterer Sensoren, wie z.B. Tachometern oder Abstandsmeßgeräten (Range Finders), die Bewegungen bewegter Objekte im Raum, die Eigenbewegung der die Bilder aufnehmenden bildgebenden Sensoren (Kameras) und die räumliche Struktur der in den Bildfolgen sichtbaren Szenen ermittelt und analysiert werden.

Solche Verfahren werden in verschiedenen Bereichen der Technik, z.B. in der Informationstechnik, der Kommunikationstechnik und der Automatisierungstechnik benötigt, um bewegte Objekte zuverlässig zu detektieren, ihre Form zu bestimmen, sie anhand ihrer Bewegung zu klassifizieren, und um die Bewegung mehrerer automatischer Systeme gegenseitig zu koordinieren. Dabei wird eine möglichst weitgehende Immunität gegen äußere Störungen und eine zuverlässige Unterscheidung zwischen Beleuchtungsänderungen und Bewegungen gefordert.

Beispiele für Anwendungen derartiger Verfahren finden sich bei videobasierten Systemen für Überwachungs- und Steuerungsaufgaben, z.B. in der Fertigungstechnik oder in der Straßenverkehrsleittechnik (intelligente Ampelsteuerung). Für Anwendungen in der Robotik, sowie für Zwecke der autonomen Navigation hat die Bestimmung räumlicher Strukturen und die Analyse räumlicher Bewegungen größte Bedeutung. Zur Unterstützung von Fahrzeugführern werden Systeme benötigt, welche mit Hilfe einer oder mehrerer Videokameras, der vom Tachometer ermittelten Fahrzeuggeschwindigkeit und mit Hilfe anoerer Daten, wie z.B. Abstandsmeßdaten, in der Lage sind, bewegte Objekte in der Umgebung des Fahrzeugs, die räumliche Struktur der Fahrzeugumgebung sowie die Eigenbewegung des Fahrzeugs in der Umgebung zu erfassen und die Bewegung detektierter Objekte zu verfolgen. Schließlich gewinnt in der Kommunikationstechnik die Bilddatenreduktion für Zwecke der Übertragung und Speicherung von Bilddaten ständig an Bedeutung. Gerade bei der Kodierung zeitlicher Bildfolgen liefert die Analyse von Bewegungen den Schlüssel zu einer entscheidenden Reduktion der Datenmengen bzw. Datenraten (Bewegungskompensation, modellbasierte Bildcodierung).

In der Fachliteratur finden sich Beschreibungen verschiedener Verfahren zur Analyse zeitlicher Folgen digitaler Bilder. Den einfachsten Verfahrenstyp stellt die sog. Änderungsdetektion (J.Wiklund, G.Granlund, "Image Sequence Analysis for Object Tracking", Proceedings of the 5th Scand. Conference on Image Analysis, Stockholm 1987) dar, bei der zeitlich aufeinanderfolgende Bilder verglichen werden. Eine verbesserte Änderungsdetektion ist z.B. in (A.Mecocci, "Moving Object Recognition and Classification in Natural Environments", Signal Processing 18 (1989), 183-194) beschrieben. Sie basiert auf dem Vergleich einer zeitlichen Bildfolge mit einer Folge von zeitlich rekursiv berechneten Referenzbildern, aus denen die bewegten Objekte eliminiert sind. Der wesentliche Nachteil der Änderungsdetektion ist darin zu sehen, daß eine unbewegte Kamera vorausgesetzt wird.

Zur Analyse von Bewegungen allgemein anwendbar sind Verfahren, die auf der Schätzung von Verschiebungsvektoren oder Verschiebungsvektorfeldern in der Bildebene basieren. Solche Verfahren sind z.B. in (H.H.Nagel, "Analyse und Interpretation von Bildfolgen", Informatikspektrum (1985) 8: 178-200 bzw. 312-327) oder in (J.K.Aggarwal, N. Nandhakumar, "On the computation of Motion from Sequences of Images - A Review", Proceedings of the IEEE, Vol 76, No. 8, 1988) beschrieben. Bei diesen Verfahrenstypen werden Verschiebungsvektoren von bewegten Objekten oder von Merkmalen, wie z.B. Kanten oder Ecken, auf bewegten Objekten in der Bildebene ermittelt.

Verfahren auf der Grundlage zweidimensionaler Verschiebungsvektoren oder Verschiebungsvektorfelder sind grundsätzlich zur Analyse von Bewegungen in digitalen Bildfolgen geeignet. Ihre Anwendbarkeit unterliegt keinerlei einschränkenden Annahmen über die Bewegung der Kamera oder die Bewegung und Zahl der im Bild sichtbaren bewegten Objekte. Im Hinblick auf eine Analyse von Bewegungen im dreidimensionalen Raum sind diese Verfahren aber nur als Vorverarbeitungs- oder Meßverfahren anzusehen, da die dreidimensionale Struktur der Umgebung und die dreidimensionale Bewegung von Objekten aus zweidimensionalen Verschiebungsvektoren nicht direkt entnommen werden kann.

Ein weiteres Verfahren ist auch aus K.-P. Karmann "Time recursive motion estimation using dynamical models for motion prediction" 16. Juni 1990, IEEE 10. International Conference on Pattern Recognition, Atlanta City US, Band 1, Seiten 268-270 bekannt. Auch bei diesem Verfahren ist aber eine Voraussetzung der Anwendbarkeit, daß der bildgebende Sensor (Kamera) unbewegt ist.

Der Erfindung liegt die Aufgabe zugrunde, ein Verfahren anzugeben, mit dem beliebige dreidimensionale Bewegungen in zeitlichen Folgen digitaler Bilder analysiert werden können. Diese Aufgabe wird durch ein Verfahren zur Analyse zeitlicher Folgen digitaler Bilder gemäß den in Anspruch 1 angegebenen Merkmalen gelöst. Weiterbildungen der Erfindung ergeben sich aus den Unteransprüchen.

Das erfindungsgemäße Verfahren basiert auch auf Verschiebungsvektoren oder Verschiebungsvektorfeldern oder ähnlichen, zwischen zwei zu verschiedenen Zeiten gehörenden Bildern gemessenen, Bewegungs-

2

daten. Im Gegensatz zu bekannten Verfahren verwendet das erfindungsgemäße Verfahren die gemessenen Bewegungsdaten aber als Meßdaten innerhalb einer zeitrekursiven Schätzung von Zustandsgrößen, die zur Beschreibung von Bewegungen geeignet sind. Diese Zustandsgrößen werden anhand eines Vergleichs der gemessenen Bewegungsdaten mit vorhergesagten Bewegungsdaten, die ihrerseits aus den Zustandsgrößen ermittelt werden, geschätzt. Durch eine geeignete Wahl der Zustandsgrößen wird erreicht, daß die Berechnung vorhergesagter Bewegungsdaten aus den Zustandsgrößen allein mit Hilfe geläufiger physikalischer Modelle der Kinematik bewegter Bezugssysteme bzw. bildgebender Sensoren möglich ist.

Durch diese Vorgehensweise lassen sich die Schwierigkeiten und Unzulänglichkeiten der bekannten Verfahren bei der Ermittlung dreidimensionaler Strukturen und bei der Schätzung dreidimensionaler Bewegungsparameter aus zweidimensionalen Bewegungsdaten überwinden. Zur Schätzung der Zustandsgrößen werden vorzugsweise zeitrekursive Zustandsschätzer, wie z.B. Kalmanfilter (F.R.Lewis, "Optimal Estimation", Wiley & Sons 1986), eingesetzt. Hierdurch wird das erfindungsgemäße Verfahren besonders robust gegen Störungen, Beleuchtungsänderungen oder Meßfehler.

Das Verfahren ermöglicht die Analyse der Eigenbewegung bildgebender Sensoren bei gleichzeitiger Detektion und Segmentierung bewegter Objekte einschließlich einer Analyse der Bewegung der detektierten Objekte.

Der Erfindungsgedanke kann durch eine große Zahl von Verfahrensvarianten verwirklicht werden, denen aber sämtlich eine einheitliche Grundstruktur gemeinsam ist. Dabei hängt es von den speziellen Gegebenheiten eines betrachteten Anwendungsfalles ab, welche Verfahrensvariante zu bevorzugen ist. Vor der Beschreibung eines bevorzugten Ausführungsbeispiels der Erfindung wird deshalb im folgenden diese allen Verfahrensvarianten gemeinsame einheitliche Grundstruktur und allgemeine Verfahrensvoraussetzungen beschrieben bzw. erläutert.

Das erfindungsgemäße Verfahren setzt in jedem Fall voraus, daß mindestens eine zeitliche Folge digitaler Bilder von mindestens einer Kamera aufgenommen wird bzw. aufgenommen wurde. Sind mehrere Kameras und damit mehrere Bildfolgen vorhanden, so können sich diese Kameras beliebig, auch relativ zueinander, im Raum bewegen. Außer den Bilddaten können noch zeitliche Folgen weiterer Meßdaten anderer Sensoren, vorzugsweise Tachometer oder Abstandssensoren (Range Finders), vom Verfahren bearbeitet werden. Die Zuverlässigkeit und Robustheit des Verfahrens steigt ganz allgemein mit der Zahl der Sensoren, und zwar besonders dann, wenn die einzelnen Sensoren unabhängige Informationen liefern. Typische Sensorkonfigurationen für das erfindungsgemäße Verfahren sind

(A) eine Kamera in Verbindung mit einem Tachometer,
(B) zwei Kameras in festem Relativabstand und mit fester Orientierung relativ zueinander und
(C) eine Kamera in Verbindung mit einem Abstandssensor.

Es sind aber auch andere Sensorkonfigurationen möglich, insbesondere Kombinationen aus den drei beschriebenen.

Das Verfahren ist auch anwendbar, falls außer einer einzigen Kamera und damit einer einzigen zeitlichen Bildfolge andere Sensoren bzw. andere Sensordaten nicht zur Verfügung stehen. In diesem Fall sind alle Abstände und Größen räumlicher Strukturen nur relativ, d.h. bis auf eine Maßeinheit, bestimmbar und dies auch nur dann, wenn die Kamera sich translatorisch bewegt. Ist die Bewegung der Kamera bekannt, z.B. weil vom Anwender kontrolliert, oder ist in den Bildern ein Objekt bzw. eine Distanz bekannter Größe sichtbar, dann kann auf die Maßeinheit und auf die absoluten Werte räumlicher Maße geschlossen werden.

Das Verfahren setzt ferner voraus, daß zwischen zu verschiedenen Zeiten gehörenden Bildern Verschiebungsvektoren oder andere Bewegungsdaten gemessen worden sind. Als Bewegungsdaten können z.B. Lage und Geschwindigkeitsvektoren bewegter Objekte oder markanter Bildpunkte oder auch Drehwinkel oder ähnliches in Frage (F.Wu, J.Kittler, "A Differential Method for Simultaneous Estimation of Rotation, Change of Scale and Translation", Signal Processing: Image Communication 2, 1990, 69-80). Es sind aus der Literatur (J.K.Aggarwal 1989) die unterschiedlichsten Methoden zur Messung von Bewegungsdaten, speziell von Verschiebungsvektoren und Verschiebungsvektorfeldern bekannt. Praktisch alle diese Methoden beruhen auf der Optimierung einer Zielfunktion oder lassen sich als Methoden zur Optimierung einer Zielfunktion deuten (B.K.P.Horn, B.G.Schunk, Determening Optical Flow, Artifical Intelligence 17 (1981), 185 - 204 bzw. (B.Jähne, Digitale Bildverarbeitung, Springer 1989). Viele dieser Methoden sind iterativ, d.h. sie ermitteln Verbesserungen zu vorgegebenen Näherungen oder Startlösungen. Die Erfindung nutzt diese Eigenschaften solcher Verfahren zur Messung von Bewegungsdaten auf besonders vorteilhafte Weise, indem das erfindungsgemäße Verfahren

- die Eigenschaften der Zielfunktion in der Nähe des Optimums als Maß zur Bewertung der Signifikanz der gemessenen Bewegungsdaten zur Steuerung der zeitrekursiven Schätzung der der Zustandsgrößen heranzieht und
- aus den geschätzten Zustandsgrößen vorhergesagte Bewegungsdaten ermittelt, welche als Näherungen oder Startlösungen zur Bestimmung der gemessenen Bewegungsdaten verwendet werden können.

B.Jähne beschreibt in B. Jähne (1987) verschiedene Möglichkeiten, aus den Eigenschaften der Zielfunktion im Optimum ein Maß für die Signifikanz der gemessenen Bewegungsdaten, z.B. eine Kovarianzmatrix zu bilden. Ein solches Maß kann zur Steuerung der zeitrekursiven Zustandsschätzung, z.B. in Form einer Meßrauschkovarianzmatrix im Falle von Kalmanfiltern, verwendet werden. Für den Fall, daß keine dichten Verschiebungsvektorfelder, sondern einzelne Verschiebungsvektoren in besonders markanten Bildpunkten (Objektkanten, etc.) gemessen werden, werden dem Gütemaß zur Bewertung der Signifikanz der Messungen in den Bildpunkten, in denen keine Messung vorliegt, entsprechend hohe Werte zugewiesen, die dem für den jeweiligen Anwendungsfall spezifischen Vorwissen über den Wertebereich zu erwartender bwz. möglicher Bewegungsdaten entsprechen.

Figur 1 zeigt eine Darstellung des Verfahrens zur Analyse zeitlicher Folgen digitaler Bilder als Signalflußdiagramm.

Figur 2 zeigt einen Signalflußplan eines bevorzugten Ausführungsbeispiels des Verfahrens.

Figur 3 zeigt einen Signalflußplan eines bevorzugten Ausführungsbeispiels des Verfahrens.

Figur 4 zeigt den Signalflußplan eines Kalmanfilters.

Anhand eines bevorzugten Ausführungsbeispiels wird die Erfindung weiter erläutert.

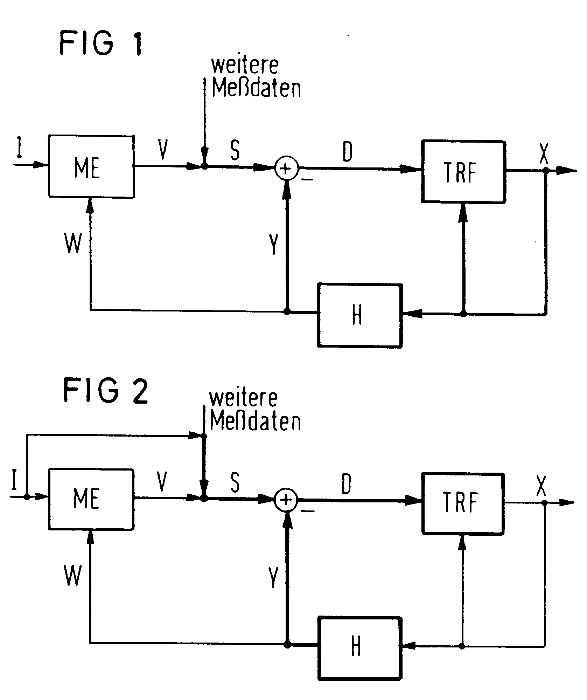

Figur 1 zeigt eine Darstellung des Verfahrens zur Analyse zeitlicher Folgen digitaler Bilder als Signalflußdiagramm. Zeitliche Folgen vorhergesagter Meßdaten Y, unter denen vorhergesagte Bewegungsdaten W zu zeitlichen Folgen digitaler Bilder I sind, werden mit zeitlichen Folgen gemessener Meßdaten S, unter denen gemessene Bewegungsdaten V zu denselben zeitlichen Folgen digitaler Bilder I sind, verglichen, in dem Differenzen D aus gemessenen Meßdaten S und vorhergesagten Meßdaten Y gebildet werden. Diese Differenz D werden einem zeitrekursiven Filter (TRF) zur Schätzung zeitlicher Folgen von Zustandsgrößen X zugeführt. Aus diesen Zustandsgrößen X werden mit Hilfe einer Meßabbildung H die vorhergesagten Meßdaten Y, darunter die vorhergesagten Bewegungsdaten W, ermittelt. Diese vorhergesagten Bewegungsdaten W werden zur Bestimmung ME gemessener Bewegungsdaten V zu den zeitlichen Folgen digitaler Bilder I herangezogen.

Figur 2 zeigt einen Signalflußplan des Verfahrens zur Analyse zeitlicher Folgen digitaler Bilder, bei dem die Bildsignale zeitlicher digitaler Bilder I selbst als Meßdaten verwendet werden.

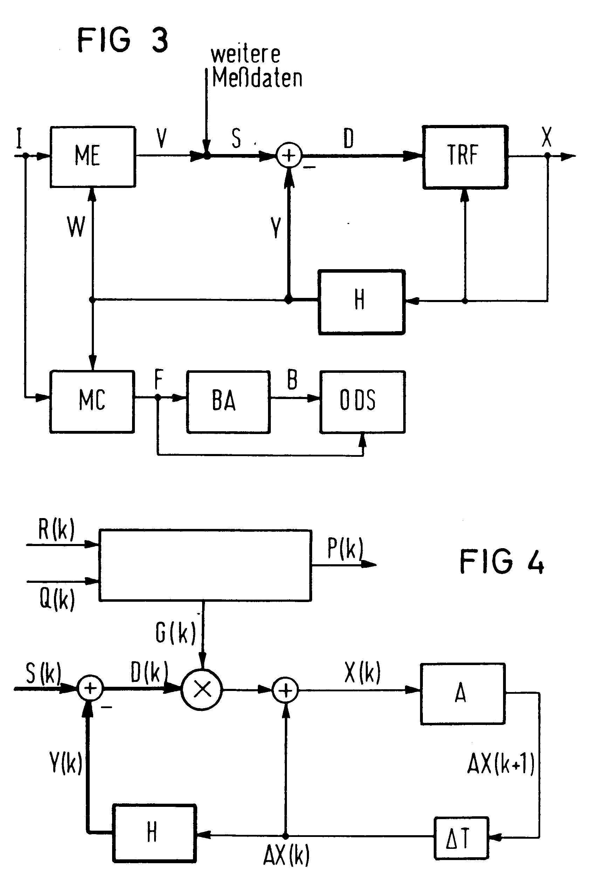

Figur 3 zeigt einen Signalflußplan des Verfahrens zur Analyse zeitlicher Folgen digitaler Bilder, bei dem die vorhergesagten Bewegungsdaten W zur Bewegungskompensation MC zeitlcher Folgen digitaler Bilder I verwendet werden. Die bewegungskompensierten Bildfolgen F werden zur Erzeugung (BA) zeitlicher Folgen von Referenzbildern B und zur Detektion und Segmentierung bewegter Objekte (ODS) herangezogen, bei der die bewegungskompensierten Bilder F mit den Referenzbildern B verglichen werden.

Figur 4 zeigt den Signalflußplan eines Kalmanfilters zur zeitrekursiven Schätzung zeitlicher Folgen von Zustandsgrößen $X(k)$ aus zeitlichen Folgen gemessener Meßdaten $S(k)$. Für jeden Zeitpunkt $k = 1, 2 \ldots$ werden die gemessenen Meßdaten $S(k)$ mit vorhergesagten Meßdaten $Y(k)$ durch Bildung der Differenzen $D(k)$ verglichen. Die Differenzen werden mit den Gewichtsfaktoren $G(k)$ multipliziert, welche sich zusammen mit den Prädiktionsfehlerkovarianzmatrizen $P(k)$ aus der Zeitabhängigkeit der Systemrauschkovarianzmatrizen $Q(k)$ und der Meßrauschkovarianzmatrizen $R(k)$ ergeben. Aus den gewichteten Differenzen und den vorhergesagten Zustandsgrößen $AX(k)$ werden die Zustandsgrößen $X(k)$ durch Addition ermittelt. Aus diesen werden die vorhergesagten Zustandsgrößen $AX(k+1)$ des folgenden Zeitpunkts $k + 1$ mit Hilfe der dynamischen Systemfunktion A erzeugt und in dem Zustandsgrößenspeicher $\Delta T$ zwischengespeichert.

Für das bevorzugte Ausführungsbeispiel wird eine Sensorkonfiguration angenommen, bei der eine bewegte Kamera eine zeitliche Folge $I(k)$ digitaler Bilder aufnimmt, und bei der ein Tachometer die Bahngeschwindigkeit u der Kamera mißt. Mit Hilfe einer der bekannten Methoden zur Bestimmung zweidimensionaler Verschiebungsvektorfelder aus zeitlichen Bildfolgen (J.K. Aggarwal 1988) werden Verschiebungsvektoren $V(k, p)$ auf einem vorgegebenen Raster von Bildpunkten p gemessen.

Allgemein ist es sinnvoll und vorteilhaft, jedem Verschiebungsvektor $V(k,p)$ zur Zeit k im Bildpunkt p ein Gütemaß zuzuordnen, daß sich aus dem Verhalten der optimierten Zielfunktion im Optimum bzw. in der Nähe des Optimums ergibt. Je schärfer das Optimum, d.h. je verschiedener die Werte der Zielfunktion in der Umgebung des Optimums von ihrem Wert im Optimum $V(k, p)$ sind, umso signifikanter die Messung $V(k, p)$. Manche Zielfunktionen haben die Eigenschaft, daß ihr Wert im Optimum selbst zur Bewertung der Signifikanz der Messung herangezogen werden kann.

Es hat sich als vorteilhaft erwiesen, die Inverse der Matrix der zweiten Ableitungen der Zielfunktion im Optimum als Kovarianzmatrix der Messung anzusehen. Im Falle der Messung von Verschiebungsvektoren nach der differentiellen Methode (B. Jähne 1989), kann dann das Gütemaß proportional zu den Intensitätsgradienten im Optimum oder einer daraus abgeleiteten Größe gewählt werden. Dabei kann die Proportionalitätskonstante z. B. vom Wert der Zielfunktion im Optimum abhängen.

Unter der Annahme, daß die Abbildungseigenschaften der Kamera in ausreichender Näherung durch die Zentralprojektion modelliert werden können, ergibt sich (J.K. Aggarwal 1989) der Zusammenhang

$$(1) \qquad V_x(k, p) = \frac{(R(k, p) \times \frac{d}{dt} R(k, p))_y}{(Z(k, p))^2} = \frac{P \times \frac{d}{dt} R(k, p)_y}{Z(k, p)}$$

und

$$(2) \qquad V_y(k, p) = \frac{(R(k, p) \times \frac{d}{dt} R(k, p))_x}{(Z(k, p))^2} = \frac{(p \times \frac{d}{dt} R(k, p))_x}{Z(k, p)}$$

zwischen den gemessenen Verschiebungsvektoren V(k, p) den Tiefendaten Z(k, p) und dem dreidimensionalen Geschwindigkeitsvektor (d/dt R(k, p).

Dabei ist

$$p = (p_x, p_y, 1) = (\frac{x}{z}, \frac{y}{z}, \frac{z}{z}) \qquad (3)$$

und

$$(4) \qquad R(k, p) = (X(k, p), Y(k, p), Z(k, p))$$

der dreidimensionale Vektor des zur Zeit k auf dem Bildpunkt p abgebildeten Raumpunktes, dessen Koordinaten in einem Koordinatensystem, dessen Achsen in Richtung der Koordinatenachsen der Bildebene bzw. in Richtung der optischen Achse der Kamera gelegt sind, mit X(k, p), Y(k, p) bzw. Z(k, p) bezeichnet werden. Der dreidimensionale Geschwindigkeitsvektor dieses Raumpunktes hat den physikalischen Gesetzen der Kinematik (Transformation von Geschwindigkeiten zwischen relativ zueinander bewegten Bezugssystemen) die Form

$$(5) \qquad \frac{d}{dt} R(k, p) = -t(k) + v(M(k, p))$$
$$-\omega(M(k, p)) \times r(M(k, p))$$
$$+ [\omega(M(k, p)) - \Omega(k)] \times R(k,p)$$

wobei

| | |
|---|---|
| M(k, p) | die laufende Nummer des Bewegtobjekts, welches im Punkt p des Bildes k sichtbar ist, M = 0, falls der Hintergrund sichtbar ist, |
| t(K) | die Geschwindigkeit des eigenen Bezugssystems, |
| $\Omega$(K) | der Rotationsvektor des eigenen Bezugssystems, |
| r(M(k, p)) | der (Schwerpunktsstrich) Lagevektor des Bewegtobjektes M(k, p), |
| v(M(k, p)) | der (Schwerpunkts-)Bewegungsvektor des Bewegtobjekts M (k, p) und |
| $\omega$(M(k, p)) | der Rotationsvektor des Bewegtobjekts M(k, p) ist. |

Die Brennweite der Kamera ist hierbei als Längeneinheit verwendet worden.

Die Gleichungen (1) und (2) sind ein Beispiel für eine Meßabbildung H im Sinne der Theorie der Kalman-Filter (Lewis 86). Die mit Hilfe des Tachometers gemessene Bahngeschwindigkeit u der Kamera ist eine u. U. mit Rauschen behaftete Meßgröße für den Betrag des Geschwindigkeitsvektors t(k) der Kamera. Zur Durchführung des Verfahrens kann auch ein anderes Meßmodell verwendet werden. Die Wahl des bevorzugten Meßmodells hängt vom Anwendungsfall und von den physikalischen Eigenschaften der Sensoren ab. Gleichung (5) definiert ein dynamisches Modell für die zeitliche Entwicklung der Zustandsgrößen

$$(6) \qquad X(k) = (t(k), \Omega(k), v(M(k)), \omega(M(k)), r(M(k)), Z(k))$$

des zeitrekursiven Schätzprozesses. Durch Diskritisierung der Zeitableitung in Gleichung (5) erhält man nämlich für die Z-Komponente dieser Gleichung die Differenzengleichung

$$(7) \qquad Z(k + 1, p) = Z(k, p) - t_z(k) + V_z(M(k, p)) - [\omega(M(k,p)) \times r(M(k,p))]_z + [(\omega(M(k,p)) - \Omega(k)) \times p]_z \cdot Z(k,p)$$

Nimmt man für die anderen Komponenten des Zustandsvektors nach Gleichung (6) an, daß diese sich (relativ zur Bildrate, oder zur Zeitschrittkonstante des Schätzprozesses) nur langsam ändern, dann liefert die Gleichung (7) den nicht trivialen Anteil eines dynamischen Systems A zur Erzeugung vorhergesagter Zustandsgrößen AX(k+1) aus Zustandsgrößen X(k). Sollen neben den Geschwindigkeiten und Drehgeschwindigkeiten der Kamera und der bewegten Objekte auch noch deren Lagekoordinaten geschätzt werden, so ist der Zustandsvektor nach Gleichung (6) um entsprechende Komponenten zu erweitern.

Durch die obigen Gleichungen ist ein Kalmanfilter zur zeitrekursiven Schätzung der Zustandsgrößen nach Gleichung (6) definiert (F.L. Lewis 1986).

Bei der zeitrekursiven Schätzung der Zustandsgrößen X aus den gemessenen Meßdaten S werden die gemessenen Meßdaten S, unter denen sich die gemessenen Bewegungsdaten V befinden, mit vorhergesagten Meßdaten Y, unter denen sich vorhergesagte Bewegungsdaten W befinden, verglichen (Figur 1). Dies geschieht vorzugsweise durch Bildung der Differenzen D(k) = S(k) - Y(k) für jeden Zeitpunkt k. Dabei kann man sich die gemessenen bzw. vorhergesagten Meßdaten S(k) bzw. Y(k) zu Vektoren zusammengefaßt denken, bei denen jeweils Komponenten mit gleichem Index einander entsprechen. Der Vergleich findet also komponentenweise statt, so daß ein Differenzvektor D(k) entsteht. Sind die den Bewegungsdaten entsprechenden Komponenten der Meßdatenvektoren gemessene bzw. vorhergesagte Verschiebungsvektoren V(k, p) bzw. W(k, p), wobei jedem Bildpunkt p, für den ein Verschiebungsvektor gemessen oder vorhergesagt wurde, eine Komponente von V(k) entspricht, dann ergeben sich also die Komponenten V(k, p) des Differenzvektors D(k), welche den Bewegungsdaten entsprechen, zu V(k,p) = V(k,p) - W(k,p).

Die so gebildeten Differenzen D(k) werden einem zeitrekursiven Filter TAF zugeordnet (Figur 1), mit dessen Hilfe die Zustandsgrößen X berechnet werden. Dieses zeitrekursive Filter ist vorzugsweise ein Kalmanfilter (F.L. Lewis, Optimal Estimation, Wiley 1986) oder eine Hierarchie von Kalmanfiltern, in welcher unbekannte Filterkoeffizienten einer hierarchishcen Ebene jeweils den Zustandsgrößen einer übergeordneten hierarchischen Ebene entsprechen und damit durch diese hierarchische Ebene geschätzt werden.

Zur Steuerung eines Kalmannfilters wird eine zeitliche Folge von Systemrauschkovarianz-Matrizen Q(k) benötigt, welche die Genauigkeit des zugrundeliegenden dynamischen Modells charakterisiert. Eine solche Folge von Systemrauschkovarianzmatrizen Q(k) kann aus den Differenzen D(k) gebildet werden. Zum Beispiel können die quadrierten Differenzen bzw. die zeitliche Folge ihrer dyadischen Produkte als Systemrauschkovarianzmatrizen Q(k) zur Steuerung der zeitrekursiven Zustandsschätzung verwendet werden.

Neben den Systemrauschkovarianzmatrizen Q(k) werden auch noch Meßrauschkovarianzmatrizen R(k) zur Steuerung des Kalmanfilters benötigt. Hierzu dient z.B. das Gütemaß, welches bei der Messung der Bewegungsdaten gewonnen wurde, oder eine daraus abgeleitete Größe.

Anstelle exakter Kalmanfilter (Figur 4) können auch andere zeitrekursive Filter verwendet werden. Kalmanfilter haben den Vorteil, daß sie sich direkt aus physikalisch ableitbaren oder physikalisch begründeten Modellen für den Zusammenhang zwischen Meßdaten und Zustandsgrößen (Modelle für den Meßprozeß, Meßabbildungen H) und aus dynamischen Modellen A für die zeitliche Entwicklung der Zustandsgrößen ableiten lassen (F.L. Lewis 1986). Praktisch alle in diesem Zusammenhang vorteilhaft einsetzbaren zeitrekursiven Filter sind Kalmanfilter (Figur 4) oder lassen sich als Näherungen von Kalamnfiltern auffassen.

Zur Detektion bewegter Objekte und zur Vergabe laufender Objektnummern M(k, p) an die Bildpunkte p, welche zur Zeit k zum bewegten Objekt M(k, p) gehören, können verschiedene Methoden verwendet werden. Für den Fall, daß die Kamerabewegung in oszillatorischer Weise auf einen bestimmten Bildausschnitt begrenzt ist, so daß über lange Zeiten die gleiche Szene in der Bildfolge sichtbar ist, kann der in Figur 3 skizzierte Weg gewählt werden. Bei dieser Methode werden mit Hilfe der vorhergesagten Bewegungsdaten W(k) und mit Hilfe der Bildfolge I(k) bewegungskompensierte Bilder F(k) berechnet (MC). Auf diese bewegungskompensierten Bilder sind die bekannten Methoden zur Detektion und Segmentierung bewegter Objekte (K.P. Karmann, A.v.-.Brandt, "Moving Object Recognition Using an Adaptive Background Memory", Proc. 3rd Intern. Workshop on Time-Varying Image Processing, Florence, Italy, May 29-31, 1989) anwendbar, welche über die zeitrekursive Berechnung einer Folge von Referenzbildern B aus den bewegungskompensierten Bildern F und mit Hilfe eines Vergleichs der bewegungskompensierten Bilder F mit den Referenzbildern B direkt zur Gewinnung binärer Objektmasken M(k, p) führen.

Im allgemeinen Fall einer beliebig bewegten Kamera ist diese Methode aber nicht anwendbar. Hier ist es vorteilhaft einen höherdimensionalen Zustandsvektor

$$(8) \qquad X(k) = (t(k), \Omega(k), v(k,p), r(k,p), \omega(k,p), Z(k,p)$$

einzuführen, bei dem für jeden Bildpunkt p verschiedene Objektbewegungsparameter v(k, p), r(k, p) und ω(k, p) vorgesehen sind. Damit dieser Zustandsvektor nicht zu hochdimensional wird, ist es vorteilhaft, sich einer Auflösungspyramide (P.J.Burt, E.H. Adelson, "The Laplacian Pyramid as a compact Image Code", Readings in Computer Vision, M.A.Fischer, O.Firschein (eds.), Morgan Kaufmann Publishers, Los Altos, CA, 1987) zu bedienen. Damit werden bewegte Objekte zunächst nur grob, entsprechend der gewählten Auflösung, segmentierbar. Jedenfalls erhält man für jeden Bildpunkt, bzw. für jeden Bildpunkt in einer Ebene einer solchen Auflösungspyramide, zunächst verschiedene Objektbewegungsparameter. Bewegte Objekte bzw. zu bewegten Objekten gehörende Segmente der Bildebene können als zusammenhängende Regionen in der Bildebene aufgefaßt werden, in denen die Bewegungsparameter einem Uniformitätskriterium genügen. Vergibt man also gleiche Nummern M(k, p) an Bildpunkte p innerhalb zusammenhängender Gebiete uniformer Objektbewegungsparameter, dann erhält man für beliebige Kamerabewegungen eine Objektsegmentierung M(k, p). Dies geschieht vorteilhaft mit Hilfe der in (Y. Shirai, "Three-Dimensional Computer Vision", Springer Verlag 1987, Seiten 86 - 89) beschriebenen Methode zum Region-Labeling".

## Patentansprüche

1.    Verfahren zur Analyse zeitlicher Folgen digitaler Bilder (I), bei dem zeitliche Folgen von Zustandsgrößen (X) anhand eines Vergleichs zeitlicher Folgen vorhergesagter Meßdaten (Y), unter denen vorhergesagte Bewegungsdaten (W) sind, mit zeitlichen Folgen gemessener Meßdaten (S), unter denen gemessene Bewegungsdaten (V) sind, zeitlich rekursiv ermittelt werden,
**dadurch gekennzeichnet ,**
daß die Zustandsgrößen (X) zur Beschreibung der Eigenbewegung mindestens eines bildgebenden Sensors sowie zur Beschreibung räumlicher Strukturen zu den Bildern mindestens eines bildgebenden Sensors und zur Beschreibung von Objektbewegungen geeignet sind, und wobei unter den gemessenen Meßdaten (S) Bildsignale (I) mindestens einer zeitlichen Folge digitaler Bilder sind, und wobei unter den vorhergesagten Meßdaten (Y) vorhergesagte Werte für diese Bildsignale sind.

2. Verfahren nach Anspruch 1,
   dadurch **gekennzeichnet,**
   daß die Bewegungsdaten Verschiebungsvektoren sind.

3. Verfahren nach einem der vorhergehenden Ansprüche,
   dadurch **gekennzeichnet,**
   daß die vorhergesagten Meßdaten (Y) aus den Zustandsgrößen (X) ermittelt werden.

4. Verfahren nach einem der vorhergehenden Ansprüche,
   dadurch **gekennzeichnet,**
   daß der Vergleich durch Bildung von Differenzen (D) zwischen den gemessenen Meßdaten (S) und den vorhergesagten Meßdaten (Y) erfolgt.

5. Verfahren nach einem der vorhergehenden Ansprüche,
   dadurch **gekennzeichnet,**
   daß die Zustandsgrößen (X) mit Hilfe mindestens eines zeitrekursiven Filters (TRF) ermittelt werden.

6. Verfahren nach einem der vorhergehenden Ansprüche,
   dadurch **gekennzeichnet,**
   daß aus dem Vergleich ein Maß für die Übereinstimmung zwischen den vorhergesagten Meßdaten (Y) und den gemessenen Meßdaten (S) ermittelt wird.

7. Verfahren nach den Ansprüchen 5 und 6,
   dadurch **gekennzeichnet,**
   daß Eigenschaften des Filters (TRF) von dem Maß für die Übereinstimmung zwischen vorhergesagten Meßdaten (Y) und gemessenen Meßdaten (S) abhängen.

8. Verfahren nach einem der vorhergehenden Ansprüche,
   dadurch **gekennzeichnet,**
   daß die gemessenen Meßdaten (V) unter Berücksichtigung der vorhergesagten Bewegungsdaten (W) bestimmt werden.

9. Verfahren nach einem der vorhergehenden Ansprüche,
   dadurch **gekennzeichnet,**
   daß bei der Bestimmung (ME) der gemessenen Meßdaten (S) die Signifikanz der gemessenen Meßdaten (S) mit Hilfe eines Gütemaßes bewertet wird.

10. Verfahren nach den Ansprüchen 5 und 9,
    dadurch **gekennzeichnet,**
    daß Eigenschaften des Filters von der Signifikanz der gemessenen Meßdaten (S), ausgedrückt durch das Gütemaß, abhängen.

11. Verfahren nach den Ansprüchen 7 und 10,
    dadurch **gekennzeichnet,**
    daß mindestens ein Filter (TRF) ein Kalmanfilter ist, dessen Systemrauschkovarianzen (Q) durch das Maß für die Übereinstimmung zwischen den vorhergesagten Meßdaten (Y) und den gemessenen Meßdaten (S) und dessen Meßrauschkovarianzen (R) durch das Gütemaß zur Bewertung der Signifikanz der gemessenen Meßdaten (S) gegeben ist.

**12.** Verfahren nach einem der vorhergehenden Ansprüche,
dadurch **gekennzeichnet,**
daß mit Hilfe der vorhergesagten Bewegungsdaten (W) mindestens eine zeitliche Folge bewegungskompensierter Bilder (F) ermittelt wird.

**13.** Verfahren nach Anspruch 12,
dadurch **gekennzeichnet,**
daß aus den bewegungskompensierten Bildern (F) mindestens eine zeitliche Folge von Referenzbildern (B) ermittelt wird.

**14.** Verfahren nach Anspruch 13,
dadurch **gekennzeichnet,**
daß bewegte Objekte durch Vergleich bewegungskompensieter Bilder (F) mit Referenzbildern (B) detektiert und segmentiert werden.

## Claims

**1.** Method for analysing temporal sequences of digital images (I), in which temporal sequences of state variables (X) are determined in a temporally recursive fashion with the aid of a comparison of temporal sequences of predicted measurement data (Y), among which are predicted movement data (W), with temporal sequences of measured measurement data (S), among which there are measured movement data (V), characterized in that the state variables (X) are suitable for describing the intrinsic movement of at least one imaging sensor and for describing spatial structures relative to the images of at least one imaging sensor and for describing object movements, and image signals (I) of at least one temporal sequence of digital images being among the measured measurement data (S), and predicted values for these image signals being among the predicted measurement data (Y).

**2.** Method according to Claim 1, characterized in that the movement data are displacement vectors.

**3.** Method according to one of the preceding claims, characterized in that the predicted measurement data (Y) are determined from the state variables (X).

**4.** Method according to one of the preceding claims, characterized in that the comparison is performed by forming differences (D) between the measured measurement data (S) and the predicted measurement data (Y).

**5.** Method according to one of the preceding claims, characterized in that the state variables (X) are determined with the aid of at least one time-recursive filter (TRF).

**6.** Method according to one of the preceding claims, characterized in that a measure of the correspondence between the predicted measurement data (Y) and the measured measurement data (S) is determined from the comparison.

**7.** Method according to Claims 5 and 6, characterized in that characteristics of the filter (TRF) depend on the measure of the correspondence between predicted measurement data (Y) and measured measurement data (S).

**8.** Method according to one of the preceding claims, characterized in that the measured measurement data (V) are determined taking account of the predicted movement data (W).

**9.** Method according to one of the preceding claims, characterized in that in determining (ME) the measured measurement data (S), the significance of the measured measurement data (S) is estimated with the aid of a measure of quality.

**10.** Method according to Claims 5 and 9, characterized in that characteristics of the filter depend on the significance of the measured measurement data (S), expressed by the measure of quality.

11. Method according to Claims 7 and 10, characterized in that at least one filter (TRF) is a Kalman filter whose system noise covariances (Q) are given by the measure of the correspondence between the predicted measurement data (Y) and the measured measurement data (S), and whose measurement noise covariances (R) are given by the measure of quality for estimating the significance of the measured measurement data (S).

12. Method according to one of the preceding claims, characterized in that at least one temporal sequence of movement-compensated images (F) is determined with the aid of the predicted movement data (W).

13. Method according to Claim 12, characterized in that at least one temporal sequence of reference images (B) is determined from the movement-compensated images (F).

14. Method according to Claim 14, characterized in that moving objects are detected and segmented by comparing movement-compensated images (F) with reference images (B).

## Revendications

1. Procédé pour analyser des suites temporelles d'images numériques (I), selon lequel on détermine, d'une manière récursive dans le temps, des suites temporelles de grandeurs d'état (X) sur la base d'une comparaison de suites temporelles de données de mesure prédites (Y), qui incluent des données prédites de déplacement (W), à des suites temporelles de données de mesure mesurées (S), qui incluent des données mesurées de déplacement (V),
caractérisé par le fait
que les grandeurs d'état (X) sont appropriées pour décrire le déplacement propre d'au moins un capteur de formation d'images ainsi que pour décrire des structures spatiales en rapport avec les images d'au moins un capteur de formation d'images et pour décrire des déplacements d'objets, les données de mesure mesurées (S) incluant des signaux d'image (I) d'au moins une suite temporelle d'images numériques, et les données de mesure prédites (Y) incluant des valeurs prédites pour ces signaux d'image.

2. Procédé suivant la revendication 1, caractérisé par le fait que les données de déplacement sont des vecteurs de déplacement.

3. Procédé suivant l'une des revendications précédentes, caractérisé par le fait que les données de mesure prédites (Y) sont déterminées à partir des grandeurs d'état (X).

4. Procédé suivant l'une des revendications précédentes, caractérisé par le fait que la comparaison s'effectue par formation de différences (D) entre les données de mesure mesurées (S) et les données de mesure prédites (Y).

5. Procédé suivant l'une des revendications précédentes, caractérisé par le fait que les grandeurs d'état (X) sont déterminées à l'aide d'au moins un filtre récursif dans le temps (TRF).

6. Procédé suivant l'une des revendications précédentes, caractérisé par le fait qu'une mesure de la coïncidence entre les données de mesure prédites (Y) et les données de mesure mesurées (S) est déterminée à partir de la comparaison.

7. Procédé suivant l'une des revendications 5 et 6, caractérisé par le fait que les caractéristiques du filtre (TRF) dépendent du degré de coïncidence entre les données de mesure prédites (Y) et les données de mesure mesurée (S).

8. Procédé suivant l'une des revendications précédentes, caractérisé par le fait que les données de mesure mesurées (V) sont déterminées en tenant compte des données de déplacement prédites (W).

9. Procédé suivant l'une des revendications précédentes, caractérisé par le fait que lors de la détermination (ME) des données de mesure mesurées (S), l'importance des données de mesure mesurées (S) est pondérée à l'aide d'un facteur de qualité.

10. Procédé suivant l'une des revendications 5 et 9, caractérisé par le fait que des caractéristiques du filtre dépendent de l'importance des données de mesure mesurées (S), exprimées au moyen du facteur de qualité.

11. Procédé suivant les revendications 7 et 10, caractérisé par le fait qu'au moins un filtre (TRF) est un filtre de Kalman, dont les covariances (Q) de bruit du système sont déterminées par le degré de coïncidence entre les données de mesure prédites (Y) et les données de mesure mesurées (S) et dont les covariances (Q) de bruit de mesure sont déterminées par le facteur de qualité pour la pondération de l'importance des données de mesure mesurées (S).

12. Procédé suivant l'une des revendications précédentes, caractérisé par le fait qu'au moins une suite temporelle d'images (F), dans lesquelles le déplacement est compensé, est déterminée à l'aide des données de déplacement prédites (W).

13. Procédé suivant la revendication 12, caractérisé par le fait qu'au moins une suite temporelle d'images de référence (B) est déterminée à partir des images (F), dans lesquelles le déplacement est compensé.

14. Procédé suivant la revendication 13, caractérisé par le fait que des objets déplacés sont détectés et segmentés par comparaison d'images (F), dans lesquelles le déplacement est compensé, à des images de référence (B).

EP 0 541 567 B1

# FIG 1

weitere Meßdaten

I → ME → V → S → (+) − → D → TRF → X

W

Y

H

# FIG 2

weitere Meßdaten

I → ME → V → S → (+) − → D → TRF → X

W

Y

H

11

## FIG 3

weitere
Meßdaten

I → ME → V ... S ⊕ → D → TRF → X

W

Y

H

MC → F → BA → B → ODS

## FIG 4

R(k) →

Q(k) →

→ P(k)

G(k)

S(k) → ⊕ → D(k) → ⊗ → ⊕ → X(k) → A

−

Y(k)

H

AX(k)

AX(k+1)

ΔT